# EUROPEAN PATENT SPECIFICATION

(11) **EP 2 954 389 B1**
(45) Date of publication and mention of the grant of the patent: **15.08.2018**
(21) Application number: 14748476.0
(22) Date of filing: 04.02.2014
(51) Int. Cl.: G06F 3/01

(54) **VARYING USER INTERFACE BASED ON LOCATION OR SPEED**
VARIIERENDE BENUTZERSCHNITTSTELLE AUF STANDORT- ODER GESCHWINDIGKEITSBASIS
INTERFACE UTILISATEUR VARIABLE EN FONCTION DE L'EMPLACEMENT OU DE LA VITESSE

(30) Priority: 05.02.2013 US 201313759821
(43) Date of publication of application: 16.12.2015
(73) Proprietor: Facebook, Inc., Menlo Park, CA 94025 (US)
(72) Inventor: ST. CLAIR, Luke, Menlo Park, CA 94025 (US)
(74) Representative: Schröer, Gernot H.
(86) International application number: PCT/US2014/014645
(87) International publication number: WO 2014/123887

(56) References cited:
- WO-A1-2012/074142
- WO-A2-2007/143106
- US-A1- 2002 054 150
- US-A1- 2010 105 370
- US-A1- 2010 317 371
- US-A1- 2011 040 657
- US-A1- 2011 065 484
- US-A1- 2012 034 877

## Description

### TECHNICAL FIELD

This disclosure generally relates to mobile computing devices. The invention relates to a method and one or more computer-readable non-transitory storage media embodying software.

### BACKGROUND

A social-networking system, which may include a social-networking website, may enable its users (such as persons or organizations) to interact with it and with each other through it. The social-networking system may, with input from a user, create and store in the social-networking system a user profile associated with the user. The user profile may include demographic information, communication-channel information, and information on personal interests of the user. The social-networking system may also, with input from a user, create and store a record of relationships of the user with other users of the social-networking system, as well as provide services (e.g. wall posts, photo-sharing, event organization, messaging, games, or advertisements) to facilitate social interaction between or among users.

The social-networking system may send over one or more networks content or messages related to its services to a mobile or other computing device of a user. A user may also install software applications on a mobile or other computing device of the user for accessing a user profile of the user and other data within the social-networking system. The social- networking system may generate a personalized set of content objects to display to a user, such as a newsfeed of aggregated stories of other users connected to the user.

A mobile computing device - such as a smartphone, tablet computer, or laptop computer - may include functionality for determining its location, direction, or orientation, such as a GPS receiver, compass, or gyroscope. Such a device may also include functionality for wireless communication, such as BLUETOOTH communication, near-field communication (NFC), or infrared (IR) communication or communication with a wireless local area networks (WLANs) or cellular-telephone network. Such a device may also include one or more cameras, scanners, touchscreens, microphones, or speakers. Mobile computing devices may also execute software applications, such as games, web browsers, or social-networking applications. With social-networking applications, users may connect, communicate, and share information with other users in their social networks.

US 2012/0034877 A1 discloses an operation method for controlling a power switch of a radios based on moving speed comprising the steps of estimating a moving speed of a radio device and comparing the moving speed with a speed threshold value, wherein, if the moving speed is below the speed threshold value, the power switch of the radio device is turned on. The method may further comprise the step of commanding the radio device to exchange at least one data message with a neighbouring radio device. Each of the radio devices exchanges data with others through an opportunistic network. In an embodiment, a navigation element in the radio device is used for locating the position, trajectory and time of the radio device to generate position information that will be integrated within the data message.

US 2011/0040657 A1 discloses a computer-implemented method for temporal and geographic presentation and navigation of linked cultural, artistic and historic content, comprising a step of providing a processor configured to register collections of music and music-related information in a database and to make the collections of music and music-related information available to users. The processor is configured to provide a navigation facility for user selection of a combination of all time, location, genre and artist in connection with the collections of music and the music-related information, and for generating and presenting to the user in response to the user selection a corresponding map through music, its history and culture with regard to the collections of music and music-related information. In an embodiment, the processor is configured to interact with, and is embedded within, a handheld GPS-enabled device. A network map interface displays a user current search, a fundamental relationship of music filters and a search button. A service is to inform the user of music-related items of interest near their current physical location. A location search pop-up widget has a current location option that makes use of GPS to identify the user's position and add it to the search. A local mode shows geographic results derived from the user's search. A GPS Locator uses GPS to centre the map on the user's current location, updating the location search component to match.

US 2011/0065484 A1 discloses a wireless mobile communication device comprising a wireless communication module for performing wireless communications, a hands-free conversation module for providing a hands-free mode of a phone conversation, a speed value generation module for receiving location or velocity information to generate a speed value and a hands-free mode controller for determining whether the speed value has exceeded a threshold value and for activating the hands-free conversation module in response to the speed value exceeding the predetermined threshold value.

### SUMMARY OF PARTICULAR EMBODIMENTS

The invention is defined in claims 1 and 5. In its embodiments, a mobile computing device determines a current location of the mobile computing device. In response to determining the current location and without manual user input, the mobile computing device modifies a user interface of the mobile computing device based at least in part on the current location.

### BRIEF DESCRIPTION OF THE DRAWINGS

FIGURE 1 illustrates an example network environment associated with a social- networking system.
FIGURE 2 illustrates an example social graph.
FIGURE 3 illustrates an example method for modifying a user interface of a mobile computing device.
FIGURES 4A-4D illustrate an example user interface of a mobile computing device.
FIGURE 5 illustrates an example computer system.

### DESCRIPTION OF EXAMPLE EMBODIMENTS

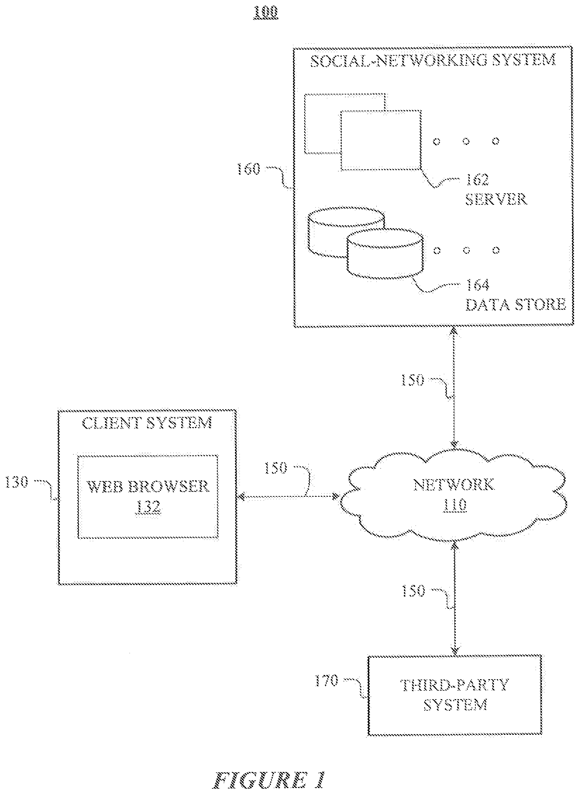

FIGURE 1 illustrates an example network environment 100 associated with a social-networking system. Network environment 100 includes a client system 130, a social-networking system 160, and a third-party system 170 connected to each other by a network 110. Although FIGURE 1 illustrates a particular arrangement of client system 130, social-networking system 160, third-party system 170, and network 110, this disclosure contemplates any suitable arrangement of client system 130, social-networking system 160, third-party system 170, and network 110. As an example and not by way of limitation, two or more of client system 130, social-networking system 160, and third-party system 170 may be connected to each other directly, bypassing network 110. As another example, two or more of client system 130, social-networking system 160, and third-party system 170 may be physically or logically co-located with each other in whole or in part. Moreover, although FIGURE 1 illustrates a particular number of client systems 130, social-networking systems 160, third-party systems 170, and networks 110, this disclosure contemplates any suitable number of client systems 130, social-networking systems 160, third-party systems 170, and networks 110. As an example and not by way of limitation, network environment 100 may include multiple client system 130, social-networking systems 160, third-party systems 170, and networks 110.

This disclosure contemplates any suitable network 110. As an example and not by way of limitation, one or more portions of network 110 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 110 may include one or more networks 110.

Links 150 may connect client system 130, social-networking system 160, and third-party system 170 to communication network 110 or to each other. This disclosure contemplates any suitable links 150. In particular embodiments, one or more links 150 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links 150 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout network environment 100. One or more first links 150 may differ in one or more respects from one or more second links 150.

In particular embodiments, client system 130 may be an electronic device including hardware, software, or embedded logic components or a combination of two or more such components and capable of carrying out the appropriate functionalities implemented or supported by client system 130. As an example and not by way of limitation, a client system 130 may include a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client systems 130. A client system 130 may enable a network user at client system 130 to access network 110. A client system 130 may enable its user to communicate with other users at other client systems 130.

In particular embodiments, client system 130 may include a web browser 132, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client system 130 may enter a Uniform Resource Locator (URL) or other address directing the web browser 132 to a particular server (such as server 162, or a server associated with a third-party system 170), and the web browser 132 may generate a Hyper Text Transfer Protocol (HTTP) request and communicate the HTTP request to server. The server may accept the HTTP request and communicate to client system 130 one or more Hyper Text Markup Language (HTML) files responsive to the HTTP request. Client system 130 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, social-networking system 160 may be a network-addressable computing system that can host an online social network. Social-networking system 160 may generate, store, receive, and send social-networking data, such as, for example, user-profile data, concept-profile data, social-graph information, or other suitable data related to the online social network. Social-networking system 160 may be accessed by the other components of network environment 100 either directly or via network 110. In particular embodiments, social-networking system 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 162 may include hardware, software, or embedded logic components or a combination of two or more such components for carrying out the appropriate functionalities implemented or supported by server 162. In particular embodiments, social-networking system 164 may include one or more data stores 164. Data stores 164 may be used to store various types of information. In particular embodiments, the information stored in data stores 164 may be organized according to specific data structures. In particular embodiments, each data store 164 may be a relational, columnar, correlation, or other suitable database. Although this disclosure describes or illustrates particular types of databases, this disclosure contemplates any suitable types of databases. Particular embodiments may provide interfaces that enable a client system 130, a social-networking system 160, or a third-party system 170 to manage, retrieve, modify, add, or delete, the information stored in data store 164.

In particular embodiments, social-networking system 160 may store one or more social graphs in one or more data stores 164. In particular embodiments, a social graph may include multiple nodes-which may include multiple user nodes (each corresponding to a particular user) or multiple concept nodes (each corresponding to a particular concept)-and multiple edges connecting the nodes. Social-networking system 160 may provide users of the online social network the ability to communicate and interact with other users. In particular embodiments, users may join the online social network via social-networking system 160 and then add connections (e.g. relationships) to a number of other users of social-networking system 160 whom they want to be connected to. Herein, the term "friend" may refer to any other user of social-networking system 160 with whom a user has formed a connection, association, or relationship via social-networking system 160.

In particular embodiments, social-networking system 160 may provide users with the ability to take actions on various types of items or objects, supported by social-networking system 160. As an example and not by way of limitation, the items and objects may include groups or social networks to which users of social-networking system 160 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 160 or by an external system of third-party system 170, which is separate from social-networking system 160 and coupled to social-networking system 160 via a network 110.

In particular embodiments, social-networking system 160 may be capable of linking a variety of entities. As an example and not by way of limitation, social-networking system 160 may enable users to interact with each other as well as receive content from third-party systems 170 or other entities, or to allow users to interact with these entities through an application programming interfaces (API) or other communication channels.

In particular embodiments, a third-party system 170 may include one or more types of servers, one or more data stores, one or more interfaces, including but not limited to APIs, one or more web services, one or more content sources, one or more networks, or any other suitable components, e.g., that servers may communicate with. A third-party system 170 may be operated by a different entity from an entity operating social-networking system 160. In particular embodiments, however, social-networking system 160 and third-party systems 170 may operate in conjunction with each other to provide social-networking services to users of social-networking system 160 or third-party systems 170. In this sense, social-networking system 160 may provide a platform, or backbone, which other systems, such as third-party systems 170, may use to provide social-networking services and functionality to users across the Internet.

In particular embodiments, a third-party system 170 may include a third-party content object provider. A third-party content object provider may include one or more sources of content objects, which may be communicated to a client system 130. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social-networking system 160 also includes user-generated content objects, which may enhance a user's interactions with social-networking system 160. User-generated content may include anything a user can add, upload, send, or "post" to social-networking system 160. As an example and not by way of limitation, a user communicates posts to social-networking system 160 from a client system 130. Posts may include data such as status updates or other textual data, location information, photos, videos, links, music or other similar data or media. Content may also be added to social-networking system 160 by a third-party through a "communication channel," such as a newsfeed or stream.

In particular embodiments, social-networking system 160 may include a variety of servers, sub-systems, programs, modules, logs, and data stores. In particular embodiments, social-networking system 160 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 160 may also include suitable components such as network interfaces, security mechanisms, load balancers, failover servers, management-and-network-operations consoles, other suitable components, or any suitable combination thereof. In particular embodiments, social-networking system 160 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 160 to one or more client systems 130 or one or more third-party system 170 via network 110. The web server may include a mail server or other messaging functionality for receiving and routing messages between social-networking system 160 and one or more client systems 130. An API-request server may allow a third-party system 170 to access information from social-networking system 160 by calling one or more APIs. An action logger may be used to receive communications from a web server about a user's actions on or off social-networking system 160. In conjunction with the action log, a third-party-content-object log may be maintained of user exposures to third-party-content objects. A notification controller may provide information regarding content objects to a client system 130. Information may be pushed to a client system 130 as notifications, or information may be pulled from client system 130 responsive to a request received from client system 130. Authorization servers may be used to enforce one or more privacy settings of the users of social-networking system 160. A privacy setting of a user determines how particular information associated with a user can be shared. The authorization server may allow users to opt in or opt out of having their actions logged by social-networking system 160 or shared with other systems (e.g. third-party system 170), such as, for example, by setting appropriate privacy settings. Third-party-content-object stores may be used to store content objects received from third parties, such as a third-party system 170. Location stores may be used for storing location information received from client systems 130 associated with users. Advertisement-pricing modules may combine social information, the current time, location information, or other suitable information to provide relevant advertisements, in the form of notifications, to a user.

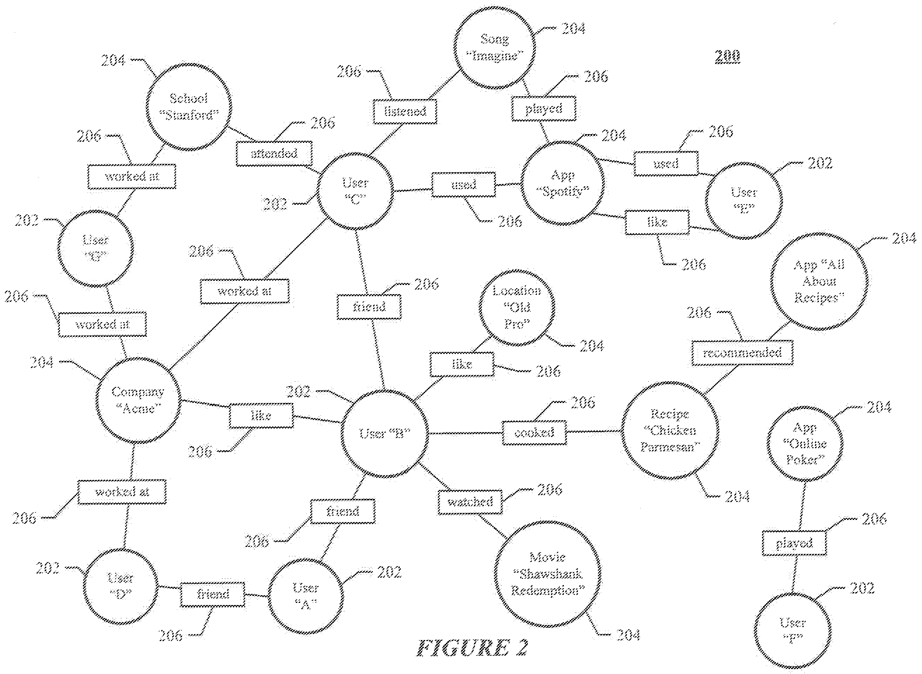

**FIGURE 2** illustrates example social graph 200. In particular embodiments, social-networking system 160 may store one or more social graphs 200 in one or more data stores. In particular embodiments, social graph 200 may include multiple nodes-which may include multiple user nodes 202 or multiple concept nodes 204-and multiple edges 206 connecting the nodes. Example social graph 200 illustrated in FIGURE 2 is shown, for didactic purposes, in a two-dimensional visual map representation. In particular embodiments, a social-networking system 160, client system 130, or third-party system 170 may access social graph 200 and related social-graph information for suitable applications. The nodes and edges of social graph 200 may be stored as data objects, for example, in a data store (such as a social-graph database). Such a data store may include one or more searchable or queryable indexes of nodes or edges of social graph 200.

In particular embodiments, a user node 202 may correspond to a user of social-networking system 160. As an example and not by way of limitation, a user may be an individual (human user), an entity (e.g. an enterprise, business, or third-party application), or a group (e.g. of individuals or entities) that interacts or communicates with or over social-networking system 160. In particular embodiments, when a user registers for an account with social-networking system 160, social-networking system 160 may create a user node 202 corresponding to the user, and store the user node 202 in one or more data stores. Users and user nodes 202 described herein may, where appropriate, refer to registered users and user nodes 202 associated with registered users. In addition or as an alternative, users and user nodes 202 described herein may, where appropriate, refer to users that have not registered with social-networking system 160. In particular embodiments, a user node 202 may be associated with information provided by a user or information gathered by various systems, including social-networking system 160. As an example and not by way of limitation, a user may provide his or her name, profile picture, contact information, birth date, sex, marital status, family status, employment, education background, preferences, interests, or other demographic information. In particular embodiments, a user node 202 may be associated with one or more data objects corresponding to information associated with a user. In particular embodiments, a user node 202 may correspond to one or more webpages.

In particular embodiments, a concept node 204 may correspond to a concept. As an example and not by way of limitation, a concept may correspond to a place (such as, for example, a movie theater, restaurant, landmark, or city); a website (such as, for example, a website associated with social-network system 160 or a third-party website associated with a web-application server); an entity (such as, for example, a person, business, group, sports team, or celebrity); a resource (such as, for example, an audio file, video file, digital photo, text file, structured document, or application) which may be located within social-networking system 160 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 204 may be associated with information of a concept provided by a user or information gathered by various systems, including social-networking system 160. As an example and not by way of limitation, information of a concept may include a name or a title; one or more images (e.g. an image of the cover page of a book); a location (e.g. an address or a geographical location); a website (which may be associated with a URL); contact information (e.g. a phone number or an email address); other suitable concept information; or any suitable combination of such information. In particular embodiments, a concept node 204 may be associated with one or more data objects corresponding to information associated with concept node 204. In particular embodiments, a concept node 204 may correspond to one or more webpages.

In particular embodiments, a node in social graph 200 may represent or be represented by a webpage (which may be referred to as a "profile page"). Profile pages may be hosted by or accessible to social-networking system 160. Profile pages may also be hosted on third-party websites associated with a third-party server 170. As an example and not by way of limitation, a profile page corresponding to a particular external webpage may be the particular external webpage and the profile page may correspond to a particular concept node 204. Profile pages may be viewable by all or a selected subset of other users. As an example and not by way of limitation, a user node 202 may have a corresponding user-profile page in which the corresponding user may add content, make declarations, or otherwise express himself or herself. As another example and not by way of limitation, a concept node 204 may have a corresponding concept-profile page in which one or more users may add content, make declarations, or express themselves, particularly in relation to the concept corresponding to concept node 204.

In particular embodiments, a concept node 204 may represent a third-party webpage or resource hosted by a third-party system 170. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g. "eat"), causing a client system 130 to send to social-networking system 160 a message indicating the user's action. In response to the message, social-networking system 160 may create an edge (e.g. an "eat" edge) between a user node 202 corresponding to the user and a concept node 204 corresponding to the third-party webpage or resource and store edge 206 in one or more data stores.

In particular embodiments, a pair of nodes in social graph 200 may be connected to each other by one or more edges 206. An edge 206 connecting a pair of nodes may represent a relationship between the pair of nodes. In particular embodiments, an edge 206 may include or represent one or more data objects or attributes corresponding to the relationship between a pair of nodes. As an example and not by way of limitation, a first user may indicate that a second user is a "friend" of the first user. In response to this indication, social-networking system 160 may send a "friend request" to the second user. If the second user confirms the "friend request," social-networking system 160 may create an edge 206 connecting the first user's user node 202 to the second user's user node 202 in social graph 200 and store edge 206 as social-graph information in one or more of data stores 24. In the example of FIGURE 2, social graph 200 includes an edge 206 indicating a friend relation between user nodes 202 of user "A" and user "B" and an edge indicating a friend relation between user nodes 202 of user "C" and user "B." Although this disclosure describes or illustrates particular edges 206 with particular attributes connecting particular user nodes 202, this disclosure contemplates any suitable edges 206 with any suitable attributes connecting user nodes 202. As an example and not by way of limitation, an edge 206 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 200 by one or more edges 206.

In particular embodiments, an edge 206 between a user node 202 and a concept node 204 may represent a particular action or activity performed by a user associated with user node 202 toward a concept associated with a concept node 204. As an example and not by way of limitation, as illustrated in FIGURE 2, a user may "like," "attended," "played," "listened," "cooked," "worked at," or "watched" a concept, each of which may correspond to a edge type or subtype. A concept-profile page corresponding to a concept node 204 may include, for example, a selectable "check in" icon (such as, for example, a clickable "check in" icon) or a selectable "add to favorites" icon. Similarly, after a user clicks these icons, social-networking system 160 may create a "favorite" edge or a "check in" edge in response to a user's action corresponding to a respective action. As another example and not by way of limitation, a user (user "C") may listen to a particular song ("Ramble On") using a particular application (SPOTIFY, which is an online music application). In this case, social-networking system 160 may create a "listened" edge 206 and a "used" edge (as illustrated in FIGURE 2) between user nodes 202 corresponding to the user and concept nodes 204 corresponding to the song and application to indicate that the user listened to the song and used the application. Moreover, social-networking system 160 may create a "played" edge 206 (as illustrated in FIGURE 2) between concept nodes 204 corresponding to the song and the application to indicate that the particular song was played by the particular application. In this case, "played" edge 206 corresponds to an action performed by an external application (SPOTIFY) on an external audio file (the song "Imagine"). Although this disclosure describes particular edges 206 with particular attributes connecting user nodes 202 and concept nodes 204, this disclosure contemplates any suitable edges 206 with any suitable attributes connecting user nodes 202 and concept nodes 204. Moreover, although this disclosure describes edges between a user node 202 and a concept node 204 representing a single relationship, this disclosure contemplates edges between a user node 202 and a concept node 204 representing one or more relationships. As an example and not by way of limitation, an edge 206 may represent both that a user likes and has used at a particular concept. Alternatively, another edge 206 may represent each type of relationship (or multiples of a single relationship) between a user node 202 and a concept node 204 (as illustrated in FIGURE 2 between user node 202 for user "E" and concept node 204 for "SPOTIFY").

In particular embodiments, social-networking system 160 may create an edge 206 between a user node 202 and a concept node 204 in social graph 200. As an example and not by way of limitation, a user viewing a concept-profile page (such as, for example, by using a web browser or a special-purpose application hosted by the user's client system 130) may indicate that he or she likes the concept represented by the concept node 204 by clicking or selecting a "Like" icon, which may cause the user's client system 130 to send to social-networking system 160 a message indicating the user's liking of the concept associated with the concept-profile page. In response to the message, social-networking system 160 may create an edge 206 between user node 202 associated with the user and concept node 204, as illustrated by "like" edge 206 between the user and concept node 204. In particular embodiments, social-networking system 160 may store an edge 206 in one or more data stores. In particular embodiments, an edge 206 may be automatically formed by social-networking system 160 in response to a particular user action. As an example and not by way of limitation, if a first user uploads a picture, watches a movie, or listens to a song, an edge 206 may be formed between user node 202 corresponding to the first user and concept nodes 204 corresponding to those concepts. Although this disclosure describes forming particular edges 206 in particular manners, this disclosure contemplates forming any suitable edges 206 in any suitable manner.

In addition, the degree of separation between any two nodes is defined as the minimum number of hops (or edges) required to traverse the social graph from one node to the other. A degree of separation between two nodes can be considered a measure of relatedness between the users or the concepts represented by the two nodes in the social graph.

Ordinarily, a layout of a user interface of a software application (or an operating system) on a computing device is static. A user may change the layout by manually selecting one or more user-interface elements within the user interface. For example, the user may perform a touch gesture (or use a mouse input device) to move or change a size of a frame (or window) within the user interface. For example, the user may select a selectable icon within the user interface to bring up a frame (or window) displaying an input field for the software application, or switch to a user interface of another application. Particular embodiments describe methods for modifying a user interface without manual input from a user. Particular embodiments may automatically modify a user interface of a mobile computing device based on a current location or velocity of the mobile computing device.

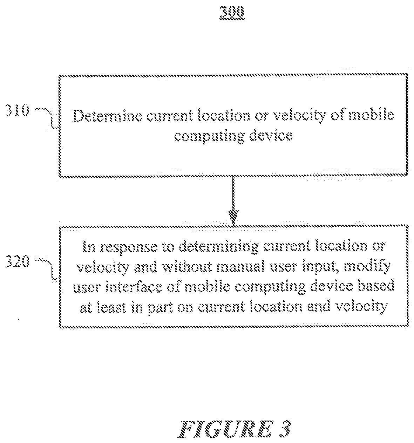

**FIGURE 3** illustrates an example method 300 for modifying a user interface of a mobile computing device. The method 300 may be implemented by a software application or an operating system executing on one or more processors of the mobile computing device. The mobile computing device may be a smartphone, tablet computer, laptop computer, or any suitable mobile devices. The method 300 may begin at step 310. In particular embodiments, at step 310, the mobile computing device may determine a current location or velocity of the mobile computing device. For example, the mobile computing device may determine a current location based on Global Positioning System (GPS) signals, cellular signal triangulation, or locations for wireless access points. Particular embodiments contemplate any suitable methods for determining a location for the mobile computing device. For example, the mobile computing device may determine a current velocity of the mobile device by calculating a location change over a period of time. Particular embodiments contemplate any suitable methods for determining a velocity for the mobile computing device.

In some embodiments, the mobile computing device may determine a current location or velocity based on a previous location or velocity. The mobile computing device may access one or more previous locations or velocities that are stored in the mobile computing device or stored at an online service such as the social-networking system. For example, the mobile computing device may determine a current location if the current location is different from a previous location (e.g., more than one mile away from the previous location). The previous location may be a location that was recorded before the current location. The previous location may be a location associated with a user of the mobile computing device (e.g., the user's home location, the user's work location). For another example, the mobile computing device may determine a current location if the mobile computing device had a velocity greater than 3 miles per hour for over a pre-determined period of time (e.g., 20 minutes) and has a current velocity being close to stationary. That is, a user associated with the mobile computing device may have been travelling (in motion) for at least the pre-determined period of time and now has arrived at the user's destination (i.e., the current location).

In particular embodiments, at step 320 the mobile computing device may, in response to determining the current location or velocity and without manual user input, modifying a user interface of the mobile computing device based at least in part on the current location or velocity. The user interface may be a user interface of a software application on the mobile computing device. The user interface may be a user interface of an operating system one the mobile computing device (e.g., a home screen of the mobile computing device).

In particular embodiments, the mobile computing device may modify the user interface by providing for display on the user interface a user-interface element that is relevant to the current location or velocity. The user-interface element may be a frame, a window, a selectable icon, or any suitable elements provided for display on the user interface of the mobile computing device. For example, the mobile computing device may determine that the current location corresponds to a country or region with a language (e.g., French) being different from a pre-set language (e.g., English) for the mobile computing device (or different from a language associated with the user of the mobile computing device). In response to the current location having a different language from the pre-set language for the mobile computing device, the mobile computing device may automatically display on the user interface of the mobile computing device a frame comprising a user interface for a dictionary tool (e.g., a French dictionary) or a language-translation tool (e.g., a French to English translator). For example, the frame may be an inline frame (e.g., an HTML iframe) automatically inserted into the user interface of the mobile computing device. For another example, the frame may be an overlying frame automatically placed on top of the user interface of the mobile computing device. In one embodiment, the user-interface element may comprise one or more advertisements that are relevant to the current location or velocity. For example, the user-interface element may comprise an advertisement of a business near the current location. For another example, the user-interface element may comprise an advertisement of a sports car if the current velocity exceeds a pre-determined threshold (e.g., 75 miles per hour).

In particular embodiments, the user-interface element may be associated with a service of the social-networking system. The mobile computing device may, in response to determining the current location or velocity and without manual user input, determine a service of the social-networking system that is relevant to the current location or velocity and provide for display a user-interface element for the service. A service of the social-networking system relevant a current location or velocity of the mobile computing device may be a location check-in, a photograph uploading tool, a search for other users in proximity to the current location, or a search of places of interests in proximity to the current location for the user of the mobile computing device. For example, the mobile computing device may, in response to determining current location or velocity and without manual user input, display on the user interface of the mobile computing device a frame comprising a user interface for a location check-in in the social-networking system. The user of the mobile computing device may submit the current location (or select from a list of nearby locations provided by the social-networking system) via the location check-in user interface to the social-networking system, causing the social-networking system to create a "check in" edge between a node corresponding to the user and a node corresponding to the current location in a social graph of the social-networking system.

For example, the mobile computing device may, in response to determining the current location or velocity and without manual user input, display on the user interface of the mobile computing device a frame comprising a user interface for a photograph uploading tool for the social-networking system (or an online photo hosting service). The user of the mobile computing device may use the photograph uploading tool to upload to the social-networking system photos associated with the current location (e.g., photos taken with the mobile computing device at or near the current location).

For example, the mobile computing device may, in response to determining the current location or velocity and without manual user input, access a social graph of the social-networking system for the user's first-degree friends having locations in proximity (e.g., within 1000 feet) to the current location. A node corresponding to a first-degree friend of the user may have an edge connecting to another node corresponding to the user in the social graph. The mobile computing device may display on the user interface of the mobile computing device a frame comprising the user's first-degree friends that are in proximity of the current location. The user of the mobile computing device may access the frame to search for other users that are in proximity to the user (at the current location).

For example, the mobile computing device may, in response to determining the current location or velocity and without manual user input, access a social graph of the social-networking system for one or more concepts nodes with locations in proximity (e.g., within one half mile) to the current location. The mobile computing device may display on the user interface of the mobile computing device a frame comprising a list of places (or concepts) corresponding to one or more of the concept nodes that are in proximity of the current location. The user may access the frame to search for places of interests in proximity to the current location. For another example, the mobile computing device may determine a user associated with the mobile computing device has arrive at a new location (the user's destination) based on a velocity change as described earlier. The mobile computing device may display on the user interface of the mobile computing device a frame comprising a list of places (or concepts) corresponding to one or more of concept nodes that are in proximity to the new location, only if the new location is at least five miles away from the user's home location (since the user is already familiar with places near his/her home location). That is, in one embodiment, the mobile computing device may, in response to determining the current location and velocity and without manual user input, modifying a user interface of the mobile computing device based at least in part on the current location and velocity.

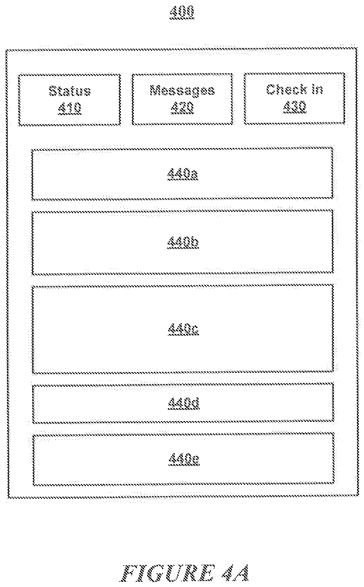

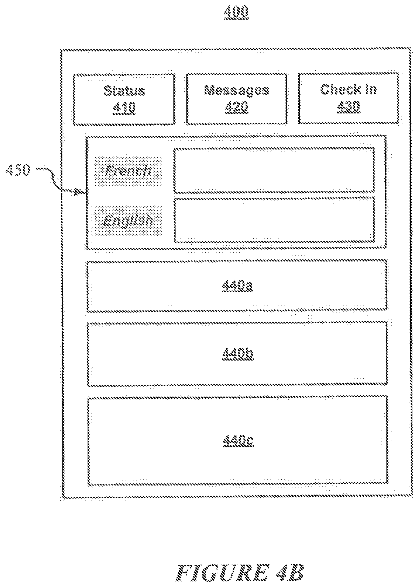

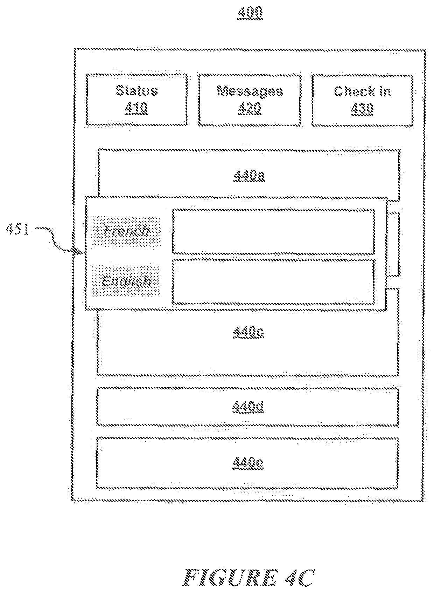

**FIGURE 4A** illustrates an example user interface 400 of the mobile computing device. The user interface 400 may comprise a user interface of a software application for accessing the social-networking system. The user interface 400 may comprise a selectable icon 410 for status update to the social-networking system, a selectable icon 420 for reading and composing messages, and a selectable icon 430 for location check-in in the social-networking system. The user interface 400 may also comprise a scrollable stack of news-feed stories 440a, 440b, 440c, and so on. As described earlier, the mobile computing device may determine a current location or velocity of the mobile computing device and, without manual user input, modify the user interface 400 based at least in part on the current location or velocity. For example, if the current location corresponds to a language (e.g., French) different from a pre-set language for the mobile computing device (e.g., English), the mobile computing device may, without manual user input, display in the user interface 400 an inline frame 450 comprising a user interface for a French-to-English translation tool, as illustrated in **FIGURE 4B****.** For another example, the mobile computing device may, without manual user input, display an overlying frame 451 comprising a user interface for a French-to-English translation tool over the user interface 400, as illustrated in **FIGURE 4C****.** The mobile computing device may also highlight the inline frame 450 or overlying frame 451 by reducing a display brightness of rest of the user interface 400.

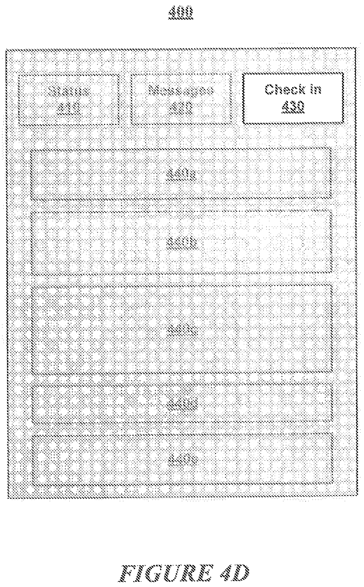

In particular embodiments, the mobile computing device may determine a current location or velocity of the mobile computing device and, without manual user input, modify a user interface of the mobile computing device based on the current location or velocity by changing a display prominence of a user-interface element (that is relevant to the current location or velocity) on the user interface of the mobile computing device. The user-interface element may be a frame, a window, a selectable icon, or any suitable elements provided for display on the user interface of the mobile computing device. The user-interface element relevant to the current location or velocity may correspond to a dictionary tool or a language-translation tool as described earlier. The user-interface element relevant to the current location or velocity may be associated with a service of the social-networking system such as a location check-in, photograph uploading, a search for users in proximity to the current location, and a search for places of interest in proximity to the current location as described earlier. For example, the mobile computing device may change a display prominence of the selectable icon 430 for a location check-in to the social-networking system in the user interface 400. The mobile device may highlight the selectable icon 430 by reducing a display brightness of rest of the user interface 400, as illustrated in **FIGURE 4D****.** The mobile computing device may also change a display prominence of the user-interface element (that is relevant to the current location or velocity) by changing a display size, a display color, or a display location of the user-interface element. Particular embodiments contemplate any suitable methods for changing a display prominence of a user-interface element that is relevant to the current location or velocity.

Particular embodiments may repeat one or more steps of the method of FIGURE 3, where appropriate. Although this disclosure describes and illustrates particular steps of the method of FIGURE 3 as occurring in a particular order, this disclosure contemplates any suitable steps of the method of FIGURE 3 occurring in any suitable order. Moreover, although this disclosure describes and illustrates particular components, devices, or systems carrying out particular steps of the method of FIGURE 3, this disclosure contemplates any suitable combination of any suitable components, devices, or systems carrying out any suitable steps of the method of FIGURE 3.

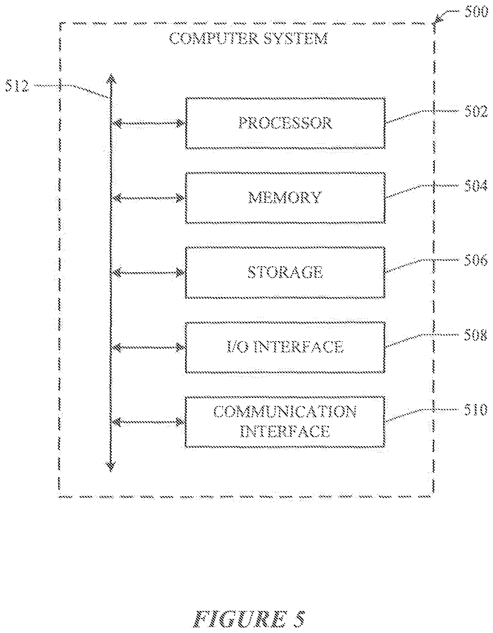

**FIGURE 5** illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system may encompass a computing device, and vice versa, where appropriate. Moreover, reference to a computer system may encompass one or more computer systems, where appropriate.

This disclosure contemplates any suitable number of computer systems 500. This disclosure contemplates computer system 500 taking any suitable physical form. As example and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multi-core processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 508 for them. Where appropriate, I/O interface 508 may include one or more device or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure is not limited to the example embodiments described or illustrated herein.

## Claims

1. A method comprising:
by a mobile computing device (130;500) associated with a user and capable of determining a current location and a current velocity of the mobile computing device (130;500) and of accessing one or more previous locations or velocities that are stored in the mobile computing device (130;500) or stored at an on-line service, determining a current location of the mobile computing device (130;500) in response to determining that the mobile computing device (130;500) has arrived at the user's destination based on a change in velocity;
by the mobile computing device (130;500), in response to determining the current location and without manual user input, modifying a user interface (400) of the mobile computing device (130;500) based at least in part on the current location
wherein modifying the user interface of the mobile computing device comprises providing for display on the user interface (400) of the mobile computing device (130;500) a user-interface element (430,450,451) that is relevant to the current location and associated with a service of a social-networking system (160) accessible through the mobile computing device (130;500), the social-networking system (160) comprising a graph (200) comprising a plurality of nodes (202,204) and edges (206) connecting the nodes (202,204), at least one node (202) in the graph (200) corresponding to the user of the mobile computing device (130;500),
wherein the method includes at least one of:
(i) the mobile computing device (130;500), without manual user input, accessing the social graph (200) for the user's first-degree friends having associated locations in proximity to the current location of the user in response to determining the current location and displaying on the user interface (400) of the mobile computing device (130;500) a frame comprising first-degree connections of the user having associated locations in proximity to the current location of the mobile computing device (130;500); and
(ii) the mobile computing device (130;500), without manual user input, accessing the social graph (200) for one or more concept nodes (204) associated with locations in proximity to the current location and displaying on the user interface (400) of the mobile computing device (130;500) a frame comprising a list of places corresponding to concept nodes (204) in the social graph (200) having locations in proximity to the current location.

2. The method of Claim 1, wherein the service comprises:
a search for other users of the social-networking system in proximity to the user who have corresponding nodes (202) in the social graph (200) connected to at least one node (202) corresponding to the user.

3. The method of claim 1 or 2,
wherein determining a current location of the mobile computing device (130;500) in response to determining that the mobile computing device (130;500) has arrived at the user's destination based on a change in velocity comprises determining a current location of the mobile computing device (130;500) if the mobile computing device (130;500) has been in motion, e.g. had a velocity greater than a pre-determined velocity, over a pre-determined period of time and has a current velocity close to stationary.

4. The method of any one of the preceding claims,
wherein the frame comprising a list of places corresponding to concept nodes (204) in the social graph (200) having locations in proximity to the current location is only displayed if the current location is at least a threshold distance away from a home location of the user.

5. One or more computer-readable non-transitory storage media embodying software that is operable when executed by a mobile computing device (130;500) associated with a user and capable of determining a current location and a current velocity of the mobile computing device (130;500) and of accessing one or more previous locations or velocities that are stored in the mobile computing device (130;500) or stored at an on-line service to:
determine a current location of the mobile computing device (130;500) in response to determining that the mobile computing device (130;500) has arrived at a user's destination based on a change in velocity; and
in response to determining the current location and without manual user input, modify a user interface (400) of the mobile computing device (130;500) based at least in part on the current location , wherein
to modify the user interface (400) of the mobile computing device (130;500), the software is operable when executed by the mobile computing device (130;500) to provide for display on the user interface (400) of the mobile computing device (130;500) a user-interface element (430,450,451) that is relevant to the current location, wherein
the user-interface element (430,450,451) is associated with a service of a social-networking system (160) accessible through the mobile computing device (130;500), the social-networking system (160) comprising a graph (200) comprising a plurality of nodes (202,204) and edges (206) connecting the nodes (202,204), at least one node (202) in the graph (200) corresponding to the user of the mobile computing device (130;500), and wherein modifying the user interface (400) includes at least one of:
(i) the mobile computing device (130;500), without manual user input, accessing the social graph (200) for the user's first-degree friends having associated locations in proximity to the current location of the user in response to determining the current location and displaying on the user interface (400) of the mobile computing device (130;500) a frame comprising first-degree connections of the user having associated locations in proximity to the current location of the mobile computing device (130;500); and
(ii) the mobile computing device (130;500), without manual user input, accessing the social graph (200) for one or more concept nodes (204) associated with locations in proximity to the current location and displaying on the user interface (400) of the mobile computing device (130;500) a frame comprising a list of places corresponding to concept nodes (204) in the social graph (200) having locations in proximity to the current location.

6. The media of Claim 5, wherein the service comprises a search for other users of the social-networking system (160) in proximity to the user that have nodes (202) in the graph (200) corresponding to them with edges (206) connected to at least one node (202) corresponding to the user.

7. The media of Claim 5 or 6, wherein, to determine a current location of the mobile computing device (130;500) in response to determining that the mobile computing device (130;500) has arrived at the user's destination based on a change in velocity, the software is operable, when executed by the mobile computing device (130;500) to determine a current location of the mobile computing device (130;500) if the mobile computing device (130;500) has been in motion, e.g. had a velocity greater than a pre-determined velocity, over a pre-determined period of time and has a current velocity close to stationary.

8. The media of any one of Claims 5-7,
wherein the software is operable, when executed by the mobile computing device (130;500) only to display the frame comprising a list of places corresponding to concept nodes (204) in the social graph (200) having locations in proximity to the current location if the current location is at least a threshold distance away from a home location of the user.

## Patentansprüche

1. Verfahren, umfassend:
durch eine mobile Computervorrichtung (130; 500), die einem Benutzer zugeordnet ist und in der Lage ist, einen aktuellen Standort und eine aktuelle Geschwindigkeit der mobilen Computervorrichtung (130; 500) zu bestimmen und auf einen oder mehrere vorherige Standorte oder Geschwindigkeiten zuzugreifen, die in der mobilen Computervorrichtung (130; 500) gespeichert sind oder bei einem Online-Dienst gespeichert sind, Bestimmen eines aktuellen Standorts der mobilen Computervorrichtung (130; 500) als Reaktion auf das Bestimmen, dass die mobile Computervorrichtung (130; 500) basierend auf einer Geschwindigkeitsänderung am Ziel des Benutzers angekommen ist;
durch die mobile Computervorrichtung (130; 500), als Reaktion auf das Bestimmen des aktuellen Standorts und ohne manuelle Benutzereingabe, Modifizieren einer Benutzerschnittstelle (400) der mobilen Computervorrichtung (130; 500) basierend zumindest teilweise auf dem aktuellen Standort,
wobei das Modifizieren der Benutzerschnittstelle der mobilen Computervorrichtung das Bereitstellen, auf der Benutzerschnittstelle (400) der mobilen Computervorrichtung (130; 500), einer Anzeige eines Benutzerschnittstellenelements (430, 450, 451) umfasst, das für den aktuellen Standort relevant ist und einem Dienst eines sozialen Netzwerksystems (160) zugeordnet ist, das über die mobile Computervorrichtung (130; 500) zugänglich ist, wobei das soziale Netzwerksystem (160) einen Graphen (200) umfasst, der eine Vielzahl von Knoten (202, 204) und Kanten (206), die die Knoten (202, 204) verbinden, umfasst, wobei mindestens ein Knoten (202) in dem Graphen (200) dem Benutzer der mobilen Computervorrichtung (130; 500) entspricht,
wobei das Verfahren mindestens eines umfasst von:
(i) Zugreifen der mobilen Computervorrichtung (130; 500), ohne manuelle Benutzereingabe, auf den sozialen Graphen (200) für die Freunde ersten Grades des Benutzers, die zugeordnete Standorte in der Nähe des aktuellen Standorts des Benutzers aufweisen, als Reaktion auf das Bestimmen des aktuellen Standorts, und Anzeigen, auf der Benutzerschnittstelle (400) der mobilen Computervorrichtung (130; 500), eines Rahmens, der Verbindungen ersten Grades des Benutzers mit zugeordneten Standorten in der Nähe des aktuellen Standorts der mobilen Computervorrichtung (130; 500) umfasst; und
(ii) Zugreifen der mobilen Computervorrichtung (130; 500), ohne manuelle Benutzereingabe, auf den sozialen Graphen (200) für einen oder mehrere Konzeptknoten (204), die Standorten in der Nähe des aktuellen Standorts zugeordnet sind, und Anzeigen, auf der Benutzerschnittstelle (400) der mobilen Computervorrichtung (130; 500), eines Rahmens, der eine Liste von Stellen umfasst, die Konzeptknoten (204) in dem sozialen Graphen (200) mit Standorten in der Nähe des aktuellen Standorts entsprechen.

2. Verfahren nach Anspruch 1, wobei die Dienstleistung umfasst:
eine Suche nach anderen Benutzern des sozialen Netzwerksystems in der Nähe des Benutzers, die entsprechende Knoten (202) im sozialen Graphen (200) aufweisen, die mit mindestens einem dem Benutzer entsprechenden Knoten (202) verbunden sind.

3. Verfahren nach Anspruch 1 oder 2,
wobei das Bestimmen einer aktuellen Position der mobilen Computervorrichtung (130; 500) als Reaktion auf das Bestimmen, dass die mobile Computervorrichtung (130; 500) basierend auf einer Geschwindigkeitsänderung am Zielort des Benutzers angekommen ist, das Bestimmen eines aktuellen Standorts der mobilen Computervorrichtung (130; 500) umfasst, wenn die mobile Computervorrichtung (130; 500) über einen vorbestimmten Zeitraum in Bewegung war, z.B. eine Geschwindigkeit höher als eine vorbestimmte Geschwindigkeit hatte, und eine aktuelle Geschwindigkeit von nahezu stillstehend hat.

4. Verfahren nach einem der vorhergehenden Ansprüche,
wobei der Rahmen, der eine Liste von Orten umfasst, die Konzeptknoten (204) in dem sozialen Graphen (200) mit Standorten in der Nähe des aktuellen Standorts aufweisen, nur angezeigt wird, wenn der aktuelle Standort mindestens einen Grenzwertabstand von einem Heimatstandort des Benutzers entfernt ist.

5. Ein oder mehrere computerlesbare, nichtflüchtige Speichermedien, die Software enthalten, die betriebsbereit ist, wenn sie von einer mobilen Computervorrichtung (130; 500) ausgeführt wird, die einem Benutzer zugeordnet ist und in der Lage ist, einen aktuellen Standort und eine aktuelle Geschwindigkeit der mobilen Computervorrichtung (130; 500) zu bestimmen und auf einen oder mehrere vorherige Standorte oder Geschwindigkeiten zuzugreifen, die in der mobilen Computervorrichtung (130; 500) gespeichert sind oder bei einem Online-Dienst gespeichert sind, um:
einen aktuellen Standort der mobilen Computervorrichtung (130; 500) als Reaktion auf das Bestimmen, dass die mobile Computervorrichtung (130; 500) basierend auf einer Geschwindigkeitsänderung am Zielort des Benutzers angekommen ist, zu bestimmen; und als Reaktion auf das Bestimmen des aktuellen Standorts und ohne manuelle Benutzereingabe, eine Benutzerschnittstelle (400) der mobilen Computervorrichtung (130; 500) basierend zumindest teilweise auf dem aktuellen Standort zu modifizieren, wobei, um die Benutzerschnittstelle (400) der mobilen Computervorrichtung (130; 500) zu modifizieren, die Software dazu betriebsbereit ist, wenn sie durch die mobile Computervorrichtung (130; 500) ausgeführt wird, auf der Benutzerschnittstelle (400) der mobilen Computervorrichtung ein Benutzerschnittstellenelement (430, 450, 451) anzuzeigen, das für den aktuellen Standort relevant ist, wobei das Benutzerschnittstellenelement (430, 450, 451) einem Dienst eines sozialen Netzwerksystems (160) zugeordnet ist, das über die mobile Computervorrichtung (130; 500) zugänglich ist, wobei das soziale Netzwerksystem (160) einen Graphen (200) umfasst, der eine Vielzahl von Knoten (202, 204) und Kanten (206), die die Knoten (202, 204) verbinden, umfasst, wobei mindestens ein Knoten (202) in dem Graphen (200) dem Benutzer der mobilen Computervorrichtung (130; 500) entspricht, und wobei das Modifizieren der Benutzerschnittstelle (400) mindestens eines umfasst von:
(i) Zugreifen der mobilen Computervorrichtung (130; 500), ohne manuelle Benutzereingabe, auf den sozialen Graphen (200) für die Freunde ersten Grades des Benutzers, die zugeordnete Standorte in der Nähe des aktuellen Standorts des Benutzers aufweisen, als Reaktion auf das Bestimmen des aktuellen Standorts, und Anzeigen, auf der Benutzerschnittstelle (400) der mobilen Computervorrichtung (130; 500), eines Rahmens, der Verbindungen ersten Grades des Benutzers mit zugeordneten Standorten in der Nähe des aktuellen Standorts der mobilen Computervorrichtung (130; 500) umfasst; und
(ii) Zugreifen der mobilen Computervorrichtung (130; 500), ohne manuelle Benutzereingabe, auf den sozialen Graphen (200) für einen oder mehrere Konzeptknoten (204), die Standorten in der Nähe des aktuellen Standorts zugeordnet sind, und Anzeigen, auf der Benutzerschnittstelle (400) der mobilen Computervorrichtung (130; 500), eines Rahmens, der eine Liste von Stellen umfasst, die Konzeptknoten (204) in dem sozialen Graphen (200) mit Standorten in der Nähe des aktuellen Standorts entsprechen.

6. Medium nach Anspruch 5, wobei der Dienst
eine Suche nach anderen Benutzern des sozialen Netzwerksystems (160) in der Nähe des Benutzers, die Knoten (202) in dem diesen entsprechenden sozialen Graphen (200) mit Knoten (206), die mit mindestens einem dem Benutzer entsprechenden Knoten (202) verbunden sind, umfasst.

7. Medium nach Anspruch 5 oder 6, wobei, um einen aktuellen Standort der mobilen Computervorrichtung (130; 500) als Reaktion auf das Bestimmen, dass die mobile Computervorrichtung (130; 500) basierend auf einer Geschwindigkeitsänderung am Zielort des Benutzers angekommen ist, zu bestimmen, die Software, wenn sie durch die Computervorrichtung (130; 500) ausgeführt wird, dazu betriebsbereit ist, einen aktuellen Standort der mobilen Computervorrichtung (130; 500) zu bestimmen, wenn die mobile Computervorrichtung (130; 500) über einen vorbestimmten Zeitraum in Bewegung war, z.B. eine Geschwindigkeit höher als eine vorbestimmte Geschwindigkeit hatte, und eine aktuelle Geschwindigkeit von nahezu stillstehend aufweist.

8. Medium nach einem der Ansprüche 5-7,
wobei die Software dazu betriebsbereit ist, wenn sie auf der mobilen Computervorrichtung (130; 500) ausgeführt wird, den Rahmen, der eine Liste von Orten umfasst, die Konzeptknoten (204) in dem sozialen Graphen (200) mit Standorten in der Nähe des aktuellen Standorts entsprechen, nur angezeigt wird, wenn der aktuelle Standort mindestens einen Grenzwertabstand von einem Heimatstandort des Benutzers entfernt ist.

## Revendications

1. Procédé comprenant:
par un dispositif informatique mobile (130; 500) associé à un utilisateur et capable de déterminer un emplacement courant et une vitesse courante du dispositif informatique mobile (130; 500) et d'accéder à un ou plusieurs emplacements précédents ou à une ou plusieurs vitesses précédentes qui sont stockés dans le dispositif informatique mobile (130; 500) ou stockés au niveau d'un service en ligne, déterminer un emplacement courant du dispositif informatique mobile (130; 500) en réponse à la détermination du fait que le dispositif informatique mobile (130; 500) est arrivé à la destination de l'utilisateur sur la base d'un changement de vitesse;
par le dispositif informatique mobile (130; 500), en réponse à la détermination de l'emplacement courant et sans entrée d'utilisateur manuelle, modifier une interface utilisateur (400) du dispositif informatique mobile (130; 500) sur la base, au moins en partie, de l'emplacement courant,
la modification de l'interface utilisateur du dispositif informatique mobile comprenant: prévoir l'affichage, sur l'interface utilisateur (400) du dispositif informatique mobile (130; 500), d'un élément d'interface utilisateur (430, 450, 451) qui est pertinent vis-à-vis de l'emplacement courant et associé à un service d'un système de réseautage social (160) accessible par l'intermédiaire du dispositif informatique mobile (130; 500), le système de réseautage social (160) comprenant un graphique (200) comprenant une pluralité de noeuds (202, 204) et des bords (206) reliant les noeuds (202, 204), et au moins un noeud (202) dans le graphique (200) correspondant à l'utilisateur du dispositif informatique mobile (130; 500),
le procédé comprenant au moins l'une des opérations suivantes:
(i) le dispositif informatique mobile (130; 500), sans entrée d'utilisateur manuelle, accède au graphique social (200) pour des amis de premier degré de l'utilisateur ayant des emplacements associés à proximité de l'emplacement courant de l'utilisateur en réponse à la détermination de l'emplacement courant et affiche, sur l'interface utilisateur (400) du dispositif informatique mobile (130; 500), une trame comprenant des connexions de premier degré de l'utilisateur ayant des emplacements associés à proximité de l'emplacement courant du dispositif informatique mobile (130; 500); et
(ii) le dispositif informatique mobile (130; 500), sans entrée d'utilisateur manuelle, accède au graphique social (200) pour un ou plusieurs noeuds de concept (204) associés à des emplacements à proximité de l'emplacement courant et affiche, sur l'interface utilisateur (400) du dispositif informatique mobile (130; 500), une trame comprenant une liste d'endroits correspondant à des noeuds de concept (204) dans le graphique social (200) ayant des emplacements à proximité de l'emplacement courant.

2. Procédé selon la revendication 1, dans lequel le service comprend:
une recherche d'autres utilisateurs du système de réseautage social à proximité de l'utilisateur qui ont des noeuds (202) correspondants dans le graphique social (200) connectés à au moins un noeud (202) correspondant à l'utilisateur.

3. Procédé selon la revendication 1 ou 2,
dans lequel la détermination d'un emplacement courant du dispositif informatique mobile (130; 500) en réponse à la détermination du fait que le dispositif informatique mobile (130; 500) est arrivé à la destination de l'utilisateur sur la base d'un changement de vitesse comprend la détermination d'un emplacement courant du dispositif informatique mobile (130; 500) si le dispositif informatique mobile (130; 500) a été en mouvement, par exemple a eu une vitesse supérieure à une vitesse prédéterminée, au cours d'une période de temps prédéterminée et a une vitesse courante proche de l'état immobile.

4. Procédé selon l'une quelconque des revendications précédentes,
dans lequel la trame comprenant une liste d'endroits correspondant à des noeuds de concept (204) dans le graphique social (200) ayant des emplacements à proximité de l'emplacement courant est uniquement affichée si l'emplacement courant est au moins à une distance de seuil d'un emplacement de domicile de l'utilisateur.

5. Support(s) de stockage non-transitoire(s) lisible(s) par ordinateur incorporant un logiciel qui peut être utilisé, lorsqu'il est exécuté par un dispositif informatique mobile (130; 500) associé à un utilisateur et capable de déterminer un emplacement courant et une vitesse courante du dispositif informatique mobile (130; 500) et d'accéder à un ou plusieurs emplacements précédents ou à une ou plusieurs vitesses précédentes qui sont stockés dans le dispositif informatique mobile (130; 500) ou stockés au niveau d'un service en ligne, pour:
déterminer un emplacement courant du dispositif informatique mobile (130; 500) en réponse à la détermination du fait que le dispositif informatique mobile (130; 500) est arrivé à la destination d'un utilisateur sur la base d'un changement de vitesse; et
en réponse à la détermination de l'emplacement courant et sans entrée d'utilisateur manuelle, modifier une interface utilisateur (400) du dispositif informatique mobile (130; 500) sur la base, au moins en partie, de l'emplacement courant, pour modifier l'interface utilisateur (400) du dispositif informatique mobile (130; 500), le logiciel pouvant être utilisé, lorsqu'il est exécuté par le dispositif informatique mobile (130; 500), pour prévoir l'affichage, sur l'interface utilisateur (400) du dispositif informatique mobile (130; 500), d'un élément d'interface utilisateur (430, 450, 451) qui est pertinent vis-à-vis de l'emplacement courant, l'élément d'interface utilisateur (430, 450, 451) étant associé à un service d'un système de réseautage social (160) accessible par l'intermédiaire du dispositif informatique mobile (130; 500), le système de réseautage social (160) comprenant un graphique (200) comprenant une pluralité de noeuds (202, 204) et des bords (206) reliant les noeuds (202, 204), au moins un noeud (202) dans le graphique (200) correspondant à l'utilisateur du dispositif informatique mobile (130; 500), et la modification de l'interface utilisateur (400) comprenant au moins l'une des opérations suivantes:
(i) le dispositif informatique mobile (130; 500), sans entrée d'utilisateur manuelle, accède au graphique social (200) pour des amis de premier degré de l'utilisateur ayant des emplacements associés à proximité de l'emplacement courant de l'utilisateur en réponse à la détermination de l'emplacement courant et affiche, sur l'interface utilisateur (400) du dispositif informatique mobile (130; 500), une trame comprenant des connexions de premier degré de l'utilisateur ayant des emplacements associés à proximité de l'emplacement courant du dispositif informatique mobile (130; 500); et
(ii) le dispositif informatique mobile (130; 500), sans entrée d'utilisateur manuelle, accède au graphique social (200) pour un ou plusieurs noeuds de concept (204) associés à des emplacements à proximité de l'emplacement courant et affiche, sur l'interface utilisateur (400) du dispositif informatique mobile (130; 500), une trame comprenant une liste d'endroits correspondant à des noeuds de concept (204) dans le graphique social (200) ayant des emplacements à proximité de l'emplacement courant.

6. Supports selon la revendication 5, dans lesquels le service comprend une recherche d'autres utilisateurs du système de réseautage social (160) à proximité de l'utilisateur qui ont des noeuds (202) dans le graphique (200) leur correspondant avec des bords (206) connectés à au moins un noeud (202) correspondant à l'utilisateur.

7. Supports selon la revendication 5 ou 6, dans lesquels, pour déterminer un emplacement courant du dispositif informatique mobile (130; 500) en réponse à la détermination du fait que le dispositif informatique mobile (130;
500) est arrivé à la destination de l'utilisateur sur la base d'un changement de vitesse, le logiciel peut être utilisé, lorsqu'il est exécuté par le dispositif informatique mobile (130; 500), pour déterminer un emplacement courant du dispositif informatique mobile (130; 500) si le dispositif informatique mobile (130; 500) a été en mouvement, par exemple a eu une vitesse supérieure à une vitesse prédéterminée, au cours d'une période de temps prédéterminée et a une vitesse courante proche de l'état immobile.

8. Supports selon l'une quelconque des revendications 5 à 7,
dans lesquels le logiciel peut être utilisé, lorsqu'il est exécuté par le dispositif informatique mobile (130; 500), uniquement pour afficher la trame comprenant une liste d'endroits correspondant à des noeuds de concept (204) dans le graphique social (200) ayant des emplacements à proximité de l'emplacement courant si l'emplacement courant est au moins à une distance de seuil d'un emplacement de domicile de l'utilisateur.
